# DEMANDE DE BREVET EUROPEEN

(11) **EP 1 662 169 A1**
(43) Date de publication de la demande: **31.05.2006**
(21) Numéro de dépôt: 04106175.5
(22) Date de dépôt: 30.11.2004
(51) Int. Cl.: F16F 9/06

(54) **Ressort pneumatique et ensemble d'amortisseur hydraulique/ressort pneumatique**

(71) Demandeur: Willé, Jean-Joseph, 4690 Wonck (BE); Dardenne, Daniel, 4682 Heure Le Romain (BE); Schoofs, Pascal, 4601 Argenteau (BE)
(72) Inventeur: Willé, Jean-Joseph, 4690 Wonck (BE); Dardenne, Daniel, 4682 Heure Le Romain (BE); Schoofs, Pascal, 4601 Argenteau (BE)
(74) Mandataire: Leherte, Georges M.L.M.

(57) **Abrégé**

L'invention concerne un ressort pneumatique, comprenant un piston (4) coulissant de manière télescopique dans un cylindre fermé, en définissant deux chambres pneumatiques dans ledit cylindre, tandis que le cylindre comprend une partie fixe (2) et une partie coulissant à l'intérieur de la partie fixe (3),
le piston (4), relié à la partie fixe (2), coulisse de manière télescopique dans ladite partie coulissante (3), de manière à définir les deux chambres principales (5) et du cylindre, et
que ladite partie coulissante (3) est munie d'un joint d'étanchéité (7) sur sa circonférence intérieure, coopérant avec la surface extérieure (8) d'un corps cylindrique central constituant l'axe dudit piston (4) de manière à séparer la chambre principale du cylindre en deux parties (6') et (6").

L'invention concerne, en outre, un tel ressort pneumatique, associé à un amortisseur hydraulique, dans lequel ledit corps cylindrique central (8) comprend le cylindre (11) d'un amortisseur hydraulique, tandis qu'un axe (12) relié à la partie coulissante (3) du cylindre pneumatique (1) agit sur ledit amortisseur hydraulique.

## Description

L'invention concerne des perfectionnements aux ressorts pneumatiques en général et en particulier aux amortisseurs à ressorts pneumatiques.

De tels ressorts et amortisseurs sont notamment utilisés pour les véhicules de type motocyclette.
Ils impliquent un piston coulissant de manière télescopique dans un cylindre, en particulier dans un cylindre fermé en formant deux chambres.
Les ressorts pneumatiques présentent la caractéristique bien connue d'être particulièrement sensibles à la variation de charge qui leur est appliquée, à la température ambiante, etc.
La variation de charge intervient, par exemple, lors de l'utilisation d'une moto avec un passager, ou en utilisation "raid" suite à la variation de poids du réservoir de carburant entre le point de départ et le point d'arrivée.

Divers systèmes de régulation ou de compensation de la pression dans les ressorts pneumatiques ont été proposés antérieurement, afin de remédier à ces phénomènes, par exemple en prévoyant un orifice mettant en communication l'une des chambres d'un ressort à cylindre fermé avec la pression atmosphérique, en prévoyant l'évacuation de l' excès de pression et/ou la re-pressurisation de la/des chambre(s) du cylindre par des systèmes de valves, ou en assurant une évacuation de la chaleur d'échauffement.
On connaît aussi le brevet américain 6.135.434 qui propose un système de by-pass entre les deux chambres d'un ressort pneumatique à cylindre fermé, associé à une valve de mise sous pression du ressort pneumatique.

La présente invention a pour objectif de fournir un système permettant d'éviter les inconvénients des systèmes antérieurs, tout en offrant des performances améliorées et une fiabilité et une simplicité optimales.

Le ressort pneumatique selon l'invention, comprend un piston coulissant de manière télescopique dans un cylindre fermé, de façon à définir deux chambres pneumatiques dans ledit cylindre, tandis
que le cylindre comprend une partie fixe et une partie coulissant de manière télescopique et étanche à l'intérieur de la partie fixe,
qu'un piston relié à la partie fixe coulisse de manière télescopique dans ladite partie coulissante, de manière à définir deux chambres principales du cylindre, et
que ladite partie coulissante est munie d'un joint d'étanchéité sur sa circonférence intérieure, coopérant avec la surface extérieure d'un corps cylindrique central constituant l'axe du dit piston de manière à séparer l'une des deux chambres principales du cylindre en deux parties.

Les expressions "partie fixe" et "partie coulissante", telles qu'utilisées dans le présent contexte doivent, bien entendu, être comprises de manière relative, l'une par rapport à l'autre (et/ou par rapport à un point de référence fixe, comme par exemple le châssis d'un véhicule), sans exclure que dans certaines applications la partie dite "coulissante" puisse être fixe par rapport à un point de référence (un châssis de véhicule) tandis que la partie dite "fixe" serait mobile.

Selon une caractéristique préférée de l'invention, le corps cylindrique central du ressort pneumatique est muni d'une zone à étanchéité réduite entre le joint d'étanchéité sur la circonférence intérieure de la partie coulissante et la surface extérieure du corps cylindrique central, permettant une mise en communication des deux parties de la chambre principale dans la partie fixe du cylindre, lors du mouvement de la partie coulissante du cylindre par rapport à la partie fixe du cylindre.
Cette zone à étanchéité réduite peut par exemple comprendre un rétrécissement du corps cylindrique central, une zone à rainures longitudinales sur le corps cylindrique central, ou tout autre solution permettant une mise en communication des deux parties de la chambre principale, lors du mouvement de la partie coulissante du cylindre par rapport à la partie fixe du cylindre.
Pour certaines applications de l'invention, le rétrécissement du corps central peut constituer un mode de réalisation préféré.

Cette disposition implique que la chambre principale dans la partie coulissante du cylindre, agit comme ressort dit "positif" lors de la compression du ressort, tandis que la partie séparée de la chambre principale dans la partie fixe du cylindre, se situant entre le piston et le joint d'étanchéité sur la circonférence intérieure de la partie coulissante du cylindre, agit comme ressort dit "négatif".

Selon une autre caractéristique préférée de l'invention, au moins une des parties de cylindre est munie d'un orifice permettant un contrôle de la pression dans au moins une desdites chambres.
Dans un mode de réalisation particulièrement préféré, une valve de gonflage permet de régler la pression dans la chambre située dans la partie coulissante du cylindre (pression principale du ressort positif), tandis qu'une valve d'alimentation permet de régler la pression dans la chambre située dans la partie fixe du cylindre.
On peut ainsi, de manière très appropriée, régler l'équilibre entre les deux chambres du ressort au point où le véhicule se trouve en sustentation statique, appelé le "point d'assiette" du véhicule ou du ressort.
Pour de nombreuses applications la pression dans la chambre principale fixe sera choisie proche de la pression atmosphérique au point d'assiette du ressort. Lors du fonctionnement du ressort, la partie séparée de la chambre principale dans la partie fixe du cylindre, se situant entre le piston et le joint d'étanchéité sur la circonférence intérieure de la partie coulissante du cylindre, agit comme ressort négatif exerçant une contre pression par rapport à la pression dans la chambre principale dans la partie coulissante du cylindre.

Dans le mode de réalisation préféré de l'invention qui prévoit une zone de d'étanchéité réduite du corps cylindrique central pour la mise en communication des deux parties séparées de la chambre fixe du cylindre lors du mouvement de la partie coulissante du cylindre par rapport à la partie fixe du cylindre, on peut, grâce à la valve d'alimentation, régler les propriétés pneumatiques de la chambre à effet de ressort négatif (c'est-à-dire de la partie séparée de la chambre principale dans la partie fixe du cylindre, se situant entre le piston et le joint d'étanchéité sur la circonférence intérieure de la partie coulissante du cylindre).

Lors du mouvement du cylindre coulissant, avec son joint d'étanchéité sur la circonférence intérieure, par rapport au corps cylindrique central, les deux chambres "séparées" du cylindre fixe seront mises en communication lorsque le joint arrivera au niveau de la zone de perte d'étanchéité ; la pression s'équilibrera entre ses deux chambres "séparées" et influencera ainsi les propriétés du ressort négatif.

Selon une autre particularité de l'invention, le rétrécissement du corps cylindrique central sera de préférence situé à un endroit ou le joint de séparation entre les deux parties de chambre du cylindre fixe accède fréquemment en usage normal, afin de permettre un équilibrage fréquent de la pression dans les deux parties de chambre.

La position de l'orifice (la valve) d'alimentation du cylindre fixe a, par contre, une importance moindre.

Selon une caractéristique supplémentaire de l'invention, le ressort pneumatique peut plus particulièrement faire partie d'un ensemble d'amortisseur hydraulique/ressort pneumatique, dans lequel ledit corps cylindrique central comprend le cylindre d'un amortisseur hydraulique, tandis qu'un axe relié à la partie coulissante du cylindre pneumatique agit sur ledit amortisseur hydraulique.
Dans un mode de réalisation préféré de cet aspect de l'invention, le joint d'étanchéité de la partie coulissante du cylindre pneumatique peut être disposé dans un corps de piston annulaire, retenu dans la partie coulissante du cylindre par un dispositif d'arrêt, tel que, de préférence une bague d'arrêt.

Selon encore une caractéristique supplémentaire de l'invention, on peut, de préférence, prévoir un joint disposé sur le piston, assurant l'étanchéité entre le piston et la partie coulissante du cylindre. De façon particulièrement préférée ce joint est de type à étanchéité bidirectionnelle.

On peut enfin prévoir
- un joint assurant l'étanchéité entre la partie fixe et la partie coulissante du cylindre, disposé, de préférence, sur la partie fixe du cylindre, et/ou.
- des moyens de guidage assurant le maintien de la partie coulissante du cylindre par rapport à la partie fixe et/ou le piston.

D'autres caractéristiques et particularités de l'invention apparaîtront à la lecture de la description, ci-après, de deux réalisations selon l'invention, exposées à titre d'exemple purement illustratif, en se référant aux dessins annexés, dans lesquels :
la figure 1 montre, schématiquement, un ressort pneumatique, selon l'invention, représenté en position de détente du ressort positif, proche de la position d'assiette ;
la figure 2 montre le ressort pneumatique selon la figure 1, représenté en positon proche du point d'équilibrage des pressions dans la chambre du ressort négatif ;
la figure 3 montre le ressort pneumatique selon les figure 1 et 2, représenté en positon de forte compression du ressort positif.

Il est souligné que les détails de ces exemples ne limitent en rien la portée de l'invention telle qu'exposée dans la description ci-dessus et telle qu'énoncée dans les revendications qui suivent.

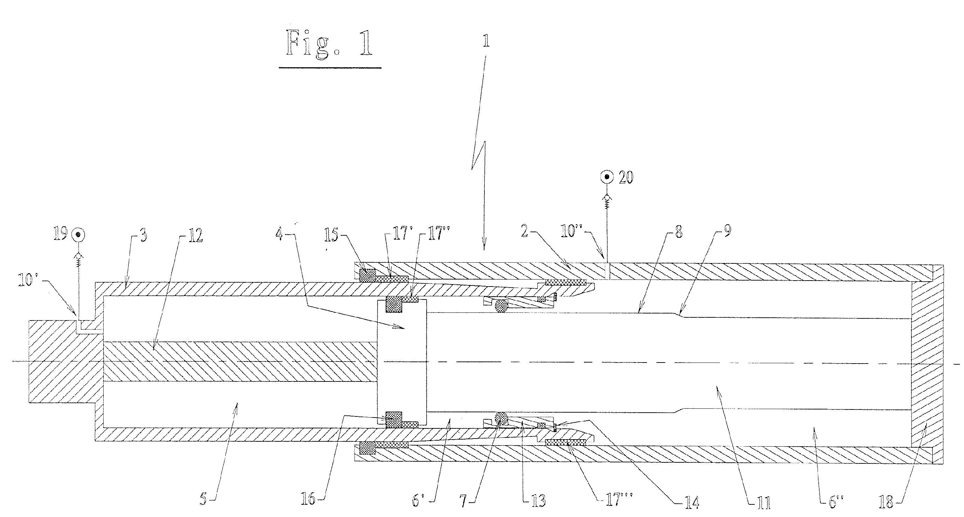

Le ressort pneumatique des figures 1-3 consiste plus particulièrement en un ensemble d'amortisseur hydraulique/ressort pneumatique, adapté à être utilisé, par exemple, en tant que fourche avant d'une motocyclette ou de jambe de force pour véhicules automobiles et autres.
Cet ensemble d'amortisseur hydraulique/ressort pneumatique comprend un cylindre, désigné dans son ensemble par la référence 1, constitué d'une partie de cylindre 2 fixe et d'une partie de cylindre 3 coulissant de manière télescopique et étanche à l'intérieur de la partie de cylindre fixe 2.
Un guidage 17 (en l'occurrence le guidage 17' et le guidage 17") et un joint d'étanchéité 15 assurent un déplacement hermétique et stable de la partie de cylindre 3 par rapport à la partie de cylindre 2.
Un piston 4, relié à la partie de cylindre fixe 2, coulisse de manière télescopique dans la partie de cylindre coulissante 3 de manière à définir deux chambres 5 et 6.
Le piston 4 est muni d'un guidage 17 (en l'occurrence le guidage 17") et d'un joint d'étanchéité 16.
La partie de cylindre coulissante 3 est munie sur sa circonférence intérieure d'un joint annulaire d'étanchéité 7 coopérant avec la surface extérieure 8 d'un corps cylindrique central constituant l'axe du piston 4.

En l'occurrence, le corps cylindrique central est constitué du corps de l'amortisseur hydraulique ("cylindre hydraulique" ou "cartouche hydraulique") 11 de l'ensemble d'amortisseur hydraulique/ressort pneumatique du présent exemple, tandis que la tige ou axe 12 de l'amortisseur est relié à la partie coulissante 3 du cylindre pneumatique et que la cartouche hydraulique 11 de l'amortisseur est reliée au bouchon 18 fermant la partie fixe 2 du cylindre pneumatique 1.

Le joint annulaire d'étanchéité 7 de la partie de cylindre coulissante 3, coopérant avec la surface 8 du corps central/cartouche hydraulique, est maintenu en place dans un "corps de piston" annulaire 13, retenu dans la partie de cylindre coulissante 3 par un dispositif d'arrêt 14.

Lorsque le ressort est en position de détente, comme le montre la figure 1, le joint d'étanchéité 7 sépare la chambre 6 de la partie de cylindre 3 en deux parties de chambre 6' et 6".
La chambre 6' peut ainsi agir comme ressort négatif, résistant à la détente du ressort pneumatique 5.

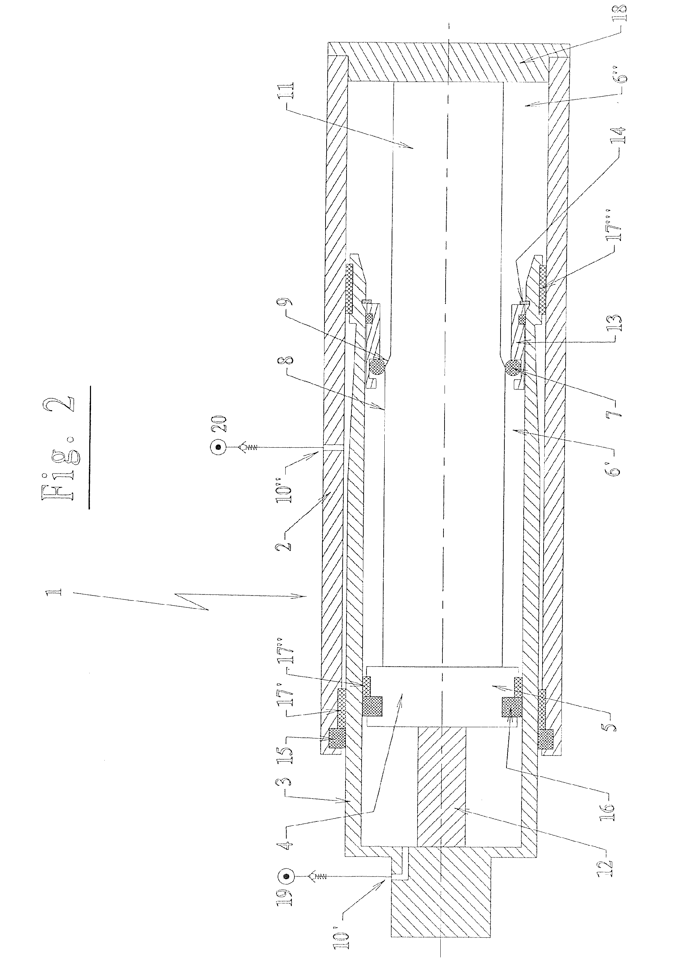

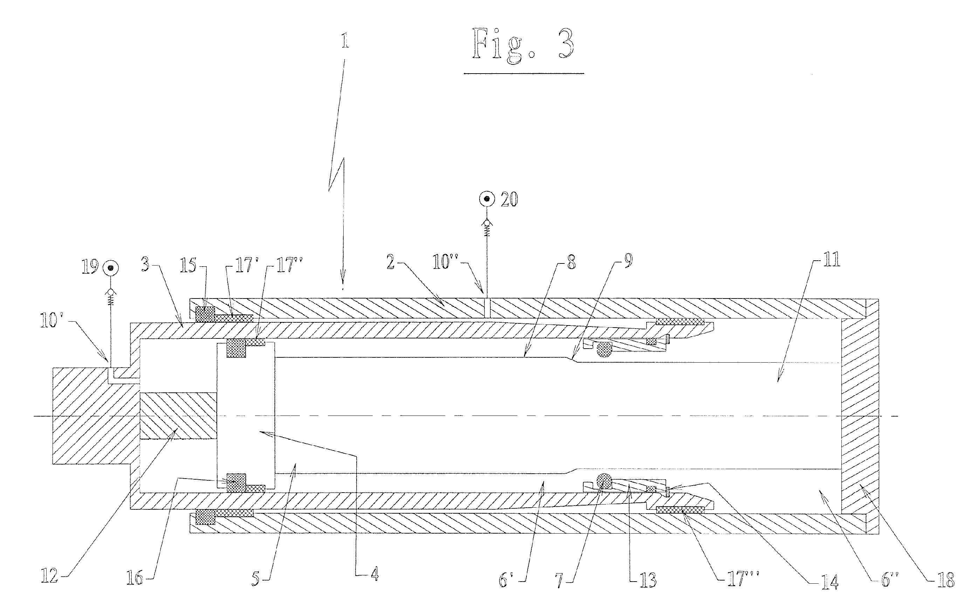

Lorsque le ressort revient en position d'échange de pression/d'équilibre de pression dans les chambres 6' et 6", comme le montre la figure 2, le joint 7 atteint un rétrécissement 9 de la circonférence du corps cylindrique central 11 et lorsque (en phase de compression) le ressort progresse vers la position de compression, comme le montre la figure 3, les chambre 6' et 6" sont mises en communication (du fait que le joint d'étanchéité 7 n'est plus en contact avec la surface 8 du corps cylindrique central 11) et la pression dans la chambre 6' s'équilibre avec la pression de la chambre 6".
Une régulation systématique du ressort négatif intervient donc à chaque passage du ressort à la position représentée en figure 2.
Grâce à des orifices 10 prévus dans les chambres 5 (orifice 10') et 6 (orifice 10"), on peut en outre modifier la pression de base régnant dans ses chambres.
Une valve de gonflage 19 permet ainsi de régler la pression principale du ressort positif dans la chambre 5, et une valve 20 permet d'alimenter, par l'extérieur du système, le volume 6/6" de pré-charge pour la chambre intérieure 6' du ressort négatif.

## Revendications

1. Ressort pneumatique, comprenant un piston coulissant de manière télescopique dans un cylindre fermé, de façon à définir deux chambres pneumatiques dans ledit cylindre, **caractérisé en ce que** ledit cylindre (1) comprend une partie fixe (2) et une partie coulissant de manière télescopique et étanche (3) à l'intérieur de la partie fixe (2), qu'un piston (4) relié à la partie fixe (2) coulisse de manière télescopique dans ladite partie coulissante (3) de manière à définir deux chambres (5) et (6), et que ladite partie coulissante (3) est munie d'un joint d'étanchéité (7) sur sa circonférence intérieure, coopérant avec la surface extérieure d'un corps cylindrique central (8) constituant l'axe du dit piston (4), de manière à séparer la chambre (6) en deux chambres (6') et (6").

2. Ressort pneumatique selon la revendication 1, **caractérisé en ce que** la surface dudit corps cylindrique central (8) est munie d'une zone à étanchéité réduite entre le joint d'étanchéité (7) sur la circonférence intérieure de la partie coulissante et la surface extérieure du corps cylindrique central (8), permettant une mise en communication des deux parties (6') et (6") de la chambre principale dans la partie fixe du cylindre, lors du mouvement de la partie coulissante du cylindre par rapport à la partie fixe du cylindre.

3. Ressort pneumatique selon la revendication 1, **caractérisé en ce que** la surface dudit corps cylindrique central (8) est munie d'un rétrécissement (9) permettant une mise en communication desdites chambres (6') et (6") lors du mouvement relatif de la partie fixe (2) et de la partie coulissante (3).

4. Ressort pneumatique selon l'une ou l'autre des revendications précédentes, **caractérisé en ce que** la partie de cylindre fixe (2) est munie d'un orifice (10') permettant un contrôle de la pression dans la chambre (5) et que la partie de cylindre coulissante (3) est munie d'un orifice (10") permettant un contrôle de la pression dans la chambre (6/6").

5. Ressort pneumatique selon l'une ou l'autre des revendications précédentes, **caractérisé en ce qu'**il fait partie d'un ensemble d'amortisseur hydraulique/ressort pneumatique dans lequel le corps cylindrique central comprend un cylindre (11) d'amortisseur hydraulique, tandis qu'un axe (12) relié à la partie coulissante (3) du cylindre pneumatique (1) agit sur ledit amortisseur hydraulique.

6. Ressort pneumatique selon l'une ou l'autre des revendications précédentes, **caractérisé en ce que** le joint d'étanchéité de la partie coulissant (3) du cylindre pneumatique (1) est disposé dans un corps de piston annulaire (13), retenu dans la partie coulissante du cylindre par un dispositif d'arrêt (14).

7. Ressort pneumatique selon la revendication 5, **caractérisé en ce que** ledit dispositif d'arrêt comprend une bague d'arrêt (14).

8. Ressort pneumatique selon l'une ou l'autre des revendications précédentes, **caractérisé en ce qu'**un joint (15) assure l'étanchéité entre la partie fixe (2) et la partie coulissante (3) du cylindre (1).

9. Ressort pneumatique selon la revendication 7, **caractérisé en ce que** ledit joint l'étanchéité (15) est disposé sur la partie fixe (2) du cylindre (1).

10. Ressort pneumatique selon l'une ou l'autre des revendications précédentes, **caractérisé en ce qu'**un joint (16) disposé sur le piston (4) assure l'étanchéité entre le piston (4) et la partie coulissante (3) du cylindre (1).
